(19)

**Europäisches Patentamt**

**European Patent Office**

**Office européen des brevets**

(11) **EP 1 801 415 B2**

(12) **NEUE EUROPÄISCHE PATENTSCHRIFT**

Nach dem Einspruchsverfahren

(45) Veröffentlichungstag und Bekanntmachung des Hinweises auf die Entscheidung über den Einspruch:
**24.02.2021 Patentblatt 2021/08**

(45) Hinweis auf die Patenterteilung:
**11.06.2014 Patentblatt 2014/24**

(21) Anmeldenummer: **06024928.1**

(22) Anmeldetag: **01.12.2006**

(51) Int Cl.:
***F03D 80/70*** (2016.01)

(54) **Windenergieanlage mit einer Nachschmiereinrichtung für Generatorlager**

Wind turbine with regreasing device for the generator bearing

Éolienne avec un dispositif de graissage pour le palier du générateur

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **02.12.2005 DE 102005057610**

(43) Veröffentlichungstag der Anmeldung:
**27.06.2007 Patentblatt 2007/26**

(73) Patentinhaber: **Siemens Gamesa Renewable Energy Service GmbH**
**22297 Hamburg (DE)**

(72) Erfinder: **Altemark, Jens**
**24768 Rendsburg (DE)**

(74) Vertreter: **Groth, Wieland**
**Patentanwalt**
**Zippelhaus 4**
**20457 Hamburg (DE)**

(56) Entgegenhaltungen:
EP-A1- 1 279 848        EP-A1- 1 538 357
WO-A1-01/25678         WO-A1-2005/092565
WO-A2-01/55634         WO-A2-2004/083630
WO-A2-2004/090504      DE-A1- 2 919 489
DE-A1- 10 043 593      DE-A1- 10 327 344
DE-A1-102004 005 543   JP-A- 11 117 914
JP-A- 2005 069 024     US-A- 6 125 969

**EP 1 801 415 B2**

**Beschreibung**

Die Erfindung betrifft eine Windenergieanlage nach dem Oberbegriff des Patenanspruchs 1 und ein Verfahren zur Durchführung mit einer Windenergieanlage, indem einem Lager, insbesondere Generatorlager, Schmierfett zugeführt wird.

Bei herkömmlichen Windenergieanlagen ist im Maschinenhaus ein Generator angeordnet, dessen Generatorwelle in einem A- und B-Lager gelagert ist. Beide Lager sind herkömmlicher Weise fettgeschmiert. Im Gegensatz zu einer Ölschmierung ist bei fettgeschmierten Lagern kein Schmierstoffkreislauf vorhanden. Bei firmenintern bekannten Windenergieanlagen findet eine zeitabhängige Nachschmierung statt, dabei wird in vorgegebenen Zeitintervallen, etwa alle fünf Stunden, eine vorbestimmte Menge an Schmierfett, etwa wenige Kubikzentimeter, in das A- und das B-Lager des Generators eingespritzt. Es hat sich herausgestellt, dass diese quasi kontinuierliche Schmierung dem tatsächlichen Verbrauch bzw. der Alterung des Schmiermittels nur unzureichend und ungenau gerecht wird. Es wurde festgestellt, dass die Lagertemperatur bei der beschriebenen Nachschmierung unerwünschten Schwankungen unterworfen ist und dass insbesondere direkt nach dem Einspritzten des Schmierfettes eine Erhöhung der Lagertemperatur auftritt.

In der DE 100 43 593 A1 ist ein Getriebe für Windgeneratoren mit einem Rotor beschrieben. Der Rotor ist durch zwei Gleitlager geführt, die als hydrostatische Gleitlager ausgebildet sind und mittels einer Pumpe mit Öl versorgt werden.

Aus der DE 29 19 489 A1 ist eine Nachschmiereinrichtung für Drehstromgeneratoren für Kraftfahrzeuge bekannt, bei der Schmiermittel verwendet wird, das unterhalb einer vorbestimmten Temperatur im Wesentlichen fest und oberhalb der vorbestimmten Temperatur im Wesentlichen flüssig ist.

In der US 6,125,969 ist ein Flüssigkeitsspender offenbart, der über einen Mikroprozessor gesteuert wird.

Aus der DE 10 2004 005 543 A1 ist eine Windkraftanlage bekannt mit einem Schmiermittelkreislauf.

Auch aus der JP 11117914 ist ein Flüssigkeitskreislauf bekannt, der mit einer hydraulischen Pumpe angetrieben wird.

Aus der DE 29 19 486 A1 ist eine das Schmiermittel über einen Schrumpfschlauch nachführende Nachschmiereinrichtung für elektrische Maschinen bekannt.

Es ist Aufgabe der Erfindung, eine Windenergieanlage, gemäß Anspruch 1, mit einer verbesserten Schmierfettversorgung für Generatorlager und ein verbessertes Verfahren zur Schmierung eines Generatorlagers zur Verfügung, gemäß Anspruch 8, zu stellen.

Die Aufgabe wird hinsichtlich der Vorrichtung durch die gattungsgemäße Windenergieanlage erfüllt, die die Merkmale des kennzeichnenden Teils des Hauptanspruchs aufweist.

Die Erfindung macht von der Idee Gebrauch, die Schmierfettzufuhr in Lagern, insbesondere in Lagern der Generatoren von Windenergieanlagen nicht mehr ausschließlich in Abhängigkeit von der Zeit erfolgen zu lassen, sondern in Abhängigkeit von sich während des Betriebs verändernden Parametern des Lagers der Windenergieanlage. Dazu ist eine die Parameterwerte messende Messeinrichtung vorgesehen und eine Steuereinrichtung, in die die Messwerte eingegeben werden. Die Steuereinrichtung ermittelt aus den Messwerten für die Schmierfettzufuhreinrichtung bestimmte, die Schmierfettmenge bestimmende Steuerwerte. Die Einrichtung entspricht in der Funktion einer Dosiereinrichtung für das Schmierfett. Vorzugsweise findet eine fortlaufende Messung des wenigstens einen Parameters statt. Und die an das A- und B-Lager des Generators abgegebene Schmiermittelmenge wird günstigenfalls fortlaufend aus den Messwerten bestimmt. Die Zufuhr des Schmiermittels kann kontinuierlich erfolgen oder quasi kontinuierlich, d. h. durch aufeinander folgende, impulsartige, kurze Schmiermittelzuführungen oder auch in größeren Intervallen.

In einer bevorzugten Ausführungsform der Erfindung ist die Messeinrichtung zur fortlaufenden Messung der Parameterwerte während eines störungsfreien Betriebs der Windenergieanlage bestimmt. Bei den erfindungsgemäß gemessenen Parametern handelt es sich vorzugsweise um Betriebsparameter, wie insbesondere Drehzahl, Anzahl der absolvierten Lagerumdrehungen, Temperatur innerhalb und außerhalb des wenigstens einen Lagers, die fortlaufend gemessen werden, und die eine Aussage über den Betriebszustand während des störungsfreien Betriebes der Anlage machen. Die Parameterwerte werden der Steuereinrichtung zugeführt, die dann, während des störungsfreien Betriebes, die Schmierfettzufuhreinrichtung zur Abgabe von Schmierfett ansteuert. Die Zufuhr von Schmierfett erfolgt erfindungsgemäß so rechtzeitig, dass eine das wenigstens eine Lager schädigende Unterversorgung mit Schmierfett gar nicht erst auftritt.

Die erfindungsgemäße Schmierfettzufuhreinrichtung eignet sich insbesondere zum Nachschmieren von Lagern eines Generators einer Windenergieanlage. Der Generator weist in der Regel eine Generatorwelle auf, die vorzugsweise in einem innen im Generator angeordneten A- und B-Lager drehbar gelagert ist. Überraschend hat sich gezeigt, dass die Menge des pro Zeitabschnitt benötigten Schmiermittels wesentlich von der Drehzahl der Generatorwelle als einem der veränderlichen Parameter im A- und B-Lager abhängt. Die Menge des pro Zeiteinheit benötigten Schmiermittels ist desto größer, je größer die durchschnittliche Drehzahl in dem Zeitabschnitt ist. Diese Erkenntnis ist insbesondere für drehzahlvariable Windenergieanlagen von Bedeutung, weil kaum eine andere Maschine bekannt ist, die unter derart unterschiedlichen, ständig wechselnden Bedingungen betrieben wird, weil Leistung, Drehzahl und Betriebstemperatur in weiten Grenzen schwanken. Erfindungsgemäß kann somit in vorausschauender Schmierung des A- und B-Lagers, die den Lagern zugeführte Schmiermittelmenge über die gemessene Drehzahl gesteuert werden. Die Drehzahl des wenigstens einen Lagers ist z.B. durch einen Drehzahlmesser bestimmbar. Drehzahlmesser sind herkömmlicher Weise an der Generatorwelle angeordnet.

Üblicherweise wird das Generatorlager mit einer Referenzdrehzahl betrieben. Der Referenzdrehzahl ist eine Referenzschmiermittelmenge zugeordnet, die von dem Typ des Schmierfetts, der Bauart des Lagers, der durchschnittlichen Lagertemperatur und anderen Faktoren abhängt. Bei schnell laufenden Generatoren mit einer Referenzdrehzahl größer als 800rpm verringert bzw. vergrößert sich bei Unterschreiten bzw. Überschreiten der Referenzdrehzahl die zur Schmierung benötigte Schmiermittelmenge mit der dritten Potenz der Drehzahlabweichung. Das ist insbesondere durch die schnellere Schmierfettalterung durch vermehrte Walkarbeit zu erklären.

Als einem weiteren, wesentlichen, die verbrauchte Schmiermittelmenge bestimmenden Parameter hat sich die Lagertemperatur des A- und B-Lagers heraus gestellt. Die Lagertemperatur ist von wiederum verschiedenen Parametern, wie der Drehzahl, der Generatorleistung aber auch der Außentemperatur, der Art des Schmierfettes und ähnlichem abhängig. Es hat sich gezeigt, dass bei konstanter Drehzahl die benötigte Schmiermittelmenge mit zunehmender durchschnittlicher Lagertemperatur mit deren fünfter Potenz zunimmt. Wenn das Lager am Referenzpunkt mit einer Referenztemperatur und einer Referenzdrehzahl betrieben wird, wird über Verringerung bzw. Vergrößerung der Lagertemperatur die benötigte Schmiermittelmenge entsprechend um die fünfte Potenz der Verringerung bzw. Vergrößerung verändert.

Es hat sich aber auch gezeigt, dass die Menge des benötigten Schmiermittels wesentlich von der Anzahl der absolvierten Lagerumdrehungen der Generatorwelle als einem der Parameter im A- und B-Lager abhängt. Die Anzahl der Lagerumdrehungen pro Zeiteinheit im A- und B-Lager ist vorzugsweise identisch. Sie hängt insbesondere von der Windstärke und auch der Übersetzung des dem Generator ggf. vorgeschalteten Getriebes ab.

Zur Ermittlung der absolvierten Lagerumdrehungen der Generatorwelle ist vorzugsweise eine Umdrehungszähleinrichtung vorgesehen. Die Umdrehungszähleinrichtung kann dabei den die Umdrehungsanzahl pro Zeiteinheit messenden Drehzahlmesser aufweisen. Die Steuereinrichtung umfasst eine Zeitmesseinrichtung, insbesondere kann sie auf eine herkömmliche Uhr zugreifen und eine Recheneinheit, mit der die pro Zeiteinheit absolvierten Lagerumdrehungen aus der Drehzahl durch Integration über die Zeit ermittelbar sind.

In einer anderen bevorzugten Ausführungsform der Erfindung weist die erfindungsgemäße Steuereinrichtung einen ersten Speicher auf, in den die von der Umdrehungszähleinrichtung ermittelte Umdrehungsanzahl einlesbar ist. In einem zweiten Speicher, der auch Bestandteil des ersten Speichers sein kann, ist günstigstenfalls eine Korrelation zwischen absolvierten Lagerumdrehungen der Generatorwelle und der Menge des in dem A- und B-Lager nachzuschmierenden Schmierfetts abgelegt. Beide Speicher können auch identisch sein. Die Recheneinheit ermittelt aus den absolvierten Lagerumdrehungen, anhand der im Speicher abgelegten Korrelation, die nachzuschmierende Schmierfettmenge. Die Steuereinrichtung steuert mit den berechneten Steuerwerten die Schmierfettzufuhreinrichtung an.

In einer besonders vorteilhaften Ausführungsform der Erfindung ist die Verwendung eines Drehzahlsensors und eines Temperatursensors zur Erfassung der Lagertemperatur vorgesehen. Damit können vorteilhafterweise durch zwei robuste und einfache Sensoren die stärksten Einflussparameter für den Schmierfettverbrauch, die Lagertemperatur, die Drehzahl und die Umdrehungsanzahl erfasst und von der Steuereinheit berücksichtigt werden, wobei die Umdrehungsanzahl als Integral der Drehzahl über die Zeit bestimmbar ist.

In einer weiteren Ausführungsform der Erfindung sind weitere Messeinrichtungen vorgesehen. Insbesondere kann ein Temperatursensor in einem Schmierfettbehälter, und/oder in einem Innenraum des Maschinenhauses und/oder außerhalb des Maschinenhauses angeordnet sein. Es ist auch denkbar, den herkömmlicher Weise im A- und/oder B-Lager vorhandenen Temperatursensor und/oder einen herkömmlicher Weise ebenfalls vorhandenen Leistungsmesser am Generator bzw. Umrichter zu nutzen. Die von den Temperatursensoren ermittelten Temperaturdaten werden der Steuereinrichtung zusätzlich zu den Umdrehungsmessdaten zugeführt. Die Steuereinrichtung ermittelt hier, unter zusätzlicher Berücksichtigung der Temperaturdaten, die Menge des nachzuführenden Schmierfetts. Die Menge des nachzuführenden Schmierfetts wird vorzugsweise empirisch für eine Reihe von Parametern, wie beispielsweise der Drehzahl, den absolvierten Lagerumdrehungen, der Umgebungstemperatur, der Lagertemperatur und ggf. weiterer Betriebsbedingungen bestimmt und vorteilhafterweise in der Steuereinrichtung abgelegt. Vorzugsweise ermittelt die Steuereinrichtung dann die Menge des nachzuführenden Schmierfetts aus den gemessenen und abgelegten Parameterwerten. Dabei kann dem Zusammenhang Rechnung getragen werden, dass eine höhere Lagertemperatur durch entweder zu wenig oder zu viel Schmierfett in dem wenigstens einen Lager verursacht werden kann. Die Steuereinrichtung kann dem Lager bei hoher Lagertemperatur und unter bestimmten Bedingungen mehr oder weniger Schmierfett zuführen. Auf diese Weise wird ein gleichmäßiges Temperaturniveau in dem wenigstens einen Lager eingestellt.

Die Schmierfettzufuhreinrichtung kann wenigstens einen Schmierfettbehälter mit einem das Schmierfett aus dem Behälter hinausdrückenden, antreibbaren Kolben aufweisen. Dabei handelt es sich um eine kostengünstig herstellbare Ausführungsform einer Schmierfettpumpe.

Der wenigstens eine Schmierfettbehälter kann einen ersten Schmierfettbehälter und einen zweiten Schmierfettbehälter aufweisen, in denen, insbesondere hinsichtlich ihres Temperatur/Viskositäts-zusammenhanges, sich unterscheidende Schmierfette bevorratet sind. In Abhängigkeit von den Parametermesswerten, insbesondere der Außentemperatur, können die den einzelnen Schmierfettbehältern zugeordnete Schmierfettpumpen durch die Steuereinrichtung separat ansteuerbar sein. Damit ist eine der Außentemperatur angepasste Schmierfettzusammensetzung in das A- und B-Lager des Generators einspritzbar.

Günstigerweise geht von jedem der Schmierfettbehälter eine Schmierfettleitung ab, die in eine gemeinsame Leitung vor dem wenigstens einen Lager übergehen. Die gemeinsame Leitung kann kostengünstig als Abschnitt eines T-Stücks ausgebildet sein, in dem die Mischung der Schmiermittel stattfindet oder vorteilhaft durch im Stand der Technik bekannte Progressiwerteiler.

Vorzugsweise werden das A-Lager und das B-Lager separat mit Schmiermittel versorgt. Damit kann einem unterschiedlichen Nachschmierungsbedarf der beiden Generatorlager Rechnung getragen werden. In Flussrichtung des Schmierfetts nach der gemeinsamen Leitung kann eine Verzweigung mit einer steuerbaren weiteren Schmierfettpumpe vorgesehen sein. Die weitere Schmierfettpumpe gestattet eine gesteuerte, unterschiedlich starke Nachschmierung jedes der beiden Generatorlager. Die weitere Schmierfettpumpe kann als einfacher einem unterschiedlich starken Schmiermittelverbrauch in den beiden Lagern Rechnung tragender Schieber ausgebildet sein. Die Schmierfettleitungen sind vorteilhafterweise grundsätzlich kurz ausgebildet, um so einer Pfropfbildung durch tiefe Temperaturen entgegenzuwirken.

Die Steuereinrichtung kann die Schmierfettpumpen je nach Bedarf, z.B. quasi kontinuierlich oder gepulst ansteuern, wobei beide Steuerformen ineinander übergehen können. Bei der quasi kontinuierlichen Ansteuerung werden in geringen Zeitabständen kleine Mengen an Schmierfett in die Lager gespritzt, und bei der gepulsten Ansteuerung liegen die Zeitabstände weiter auseinander und größere Schmierfettmengen werden den Lagern zugeführt.

In einer weiteren bevorzugten Ausführungsform der Erfindung ist in einem Speicher der Steuereinrichtung eine Korrelation zwischen nachzuführender Schmierfettmenge und Parameterwerten abgelegt, die den oben geschilderten Zusammenhängen zwischen z. B. Temperaturmesswerten und insbesondere Drehzahl und Anzahl der Lagerumdrehungen und Schmierfettbedarf Rechnung tragen.

In dem zweiten Speicher sind die Anzahl der gezählten Lagerumdrehungen, der Drehzahlverlauf über die Zeit, die gemessenen Temperaturwerte, die gemessene Generatorleistung u. Ä. ablegbar. Eine Recheneinheit liest die Werte aus dem zweiten Speicher aus und ermittelt über die in dem ersten Speicher abgelegte Korrelation die Menge der Nachschmierung für jedes der Lager. Die Antriebe der Schmiermittelpumpen sind durch die Steuereinrichtung entsprechend ansteuerbar.

Erfindungsgemäß wird nach einer erfolgten Schmierfettzufuhr der zweite Speicher für die Anzahl der gemessenen Umdrehungen wieder auf Null gesetzt und die Umdrehungen werden von neuem gezählt.

Die Aufgabe wird auch durch ein Verfahren zur Fettschmierung eines Generatorlagers in einer Windenergieanlage, gelöst, indem einem Generatorlager Schmierfett durch eine Schmierfettzufuhreinrichtung zugeführt wird und Werte wenigstens eines Parameters der betriebenen Windenergieanlage durch wenigstens eine Messeinrichtung gemessen werden und eine mit der wenigstens einen Messeinrichtung und der Schmierfettzufuhreinrichtung in Verbindung stehende Steuereinrichtung, die die Menge des von der Schmierfettzufuhreinrichtung nachzuschmierenden Schmierfettes in Abhängigkeit von den gemessenen Parameterwerten steuert.

In einer bevorzugten Ausführungsform der Erfindung werden die Parameterwerte mit der wenigstens einen Messeinrichtung während des störungsfreien Betriebs, vorzugsweise fortlaufend, ermittelt. Die Steuereinrichtung steuert die Schmierfettzufuhreinrichtung dann während des störungsfreien Betriebs an und führt ständig eine dosierte Menge Schmierfett nach, damit ein Schmierfettmangel oder Überschuss nicht auftritt. Der Generator wird am Referenzpunkt mit einer Referenztemperatur im Generatorlager und einer Referenzdrehzahl betrieben.

Vorzugsweise weist der wenigstens eine Parameter die Drehzahl des wenigstens einen Lagers der Generatorwelle auf. Die Drehzahl kann mit einem an der Generatorwelle angeordneten Drehzahlmesser bestimmt werden. Die Drehzahlmesswerte werden der Steuereinrichtung zugeführt und diese steuert die Schmierfettzufuhreinrichtung zur Abgabe einer der Drehzahl zugeordneten Schmierfettmenge an. Bei konstanter Lagertemperatur nimmt die benötigte Schmierfettmenge vorzugsweise mit der dritten Potenz des Quotienten aus gemessener Drehzahl und Referenzdrehzahl zu.

Günstigenfalls wird die Lagertemperatur als weiterer wesentlicher Parameter mittels eines Temperatursensors gemessen. Bei höherer Temperatur wird dem Generatorlager mehr Schmierfett zugeführt. Vorzugsweise steigt die zugeführte Schmierfettmenge mit der fünften Potenz des Quotienten aus gemessener Temperatur und Referenztemperatur.

Vorzugsweise werden sowohl Lagertemperatur als auch Drehzahl gemessen, und die Schmierfettzufuhr wird unter Berücksichtigung beider Parameterwerte angesteuert.

In einer weiteren Ausführungsform der Erfindung wird die Anzahl der absolvierten Umdrehungen der Welle, insbesondere der Generatorwelle, ermittelt, und es wird die Anzahl der Umdrehungen der Generatorwelle mit Hilfe des Drehzahlmessers und einer Uhr ermittelt. Eine Recheneinheit integriert die gemessene Drehzahl über die verstrichene Zeit auf und berechnet so die absolvierten Lagerumdrehungen. Die Anzahl der absolvierten Lagerumdrehungen ist bei einer erfindungsgemäßen Ausführungsform einer die Nachschmiermenge bestimmender Parameter.

In einem ersten Speicher kann die Korrelation zwischen Parameterwerten und Nachschmiermenge abgelegt werden. Die Umdrehungsanzahl und andere gemessene Parameterwerte werden in einem zweiten Speicher gespeichert. Der zweite Speicher wird auf Null gesetzt, nachdem eine Schmierfetteinspritzung erfolgt ist. Der erste und zweite Speicher können identisch sein.

Wenn der Temperatursensor im A- oder B-Lager einen überhöhten Temperaturwert anzeigt, wird anhand der gemessenen Parameterwerte geprüft, ob Schmierfett nachgeführt werden muss, insbesondere wird dazu die Anzahl von Lagerumdrehungen seit der letzen Nachschmierung geprüft. Wenn die Anzahl hoch ist, z.B. oberhalb eines vorgegebenen Grenzwerts liegt, ist vermutlich zu viel Schmierfett verbraucht worden und es ist zu wenig Schmierfett im A-Lager bzw. B-Lager vorhanden. Es muss dann nachgeschmiert werden. Wenn die Anzahl der Lagerumdrehungen seit der letzten Schmierung gering ist, z.B. unterhalb des Grenzwertes liegt, ist vermutlich zu viel Schmierfett im Lager und es wird zunächst nicht nachgeschmiert.

Das beanspruchte Schmierfettverfahren als auch die beanspruchte Vorrichtung sind auf jeden beliebigen Lagertyp übertragbar und betreffen insbesondere auch fettgeschmierte Lager für langsam laufende Ringgeneratoren bei Windenergieanlagen ohne Getriebe als auch Rotor- und Getriebelager.

Die Erfindung wird anhand eines Ausführungsbeispieles in zwei Figuren beschrieben. Dabei zeigen:

Fig. 1    eine schematische Seitenansicht eines Getriebes und Generators in einem Maschinenhaus,

Fig. 2    eine schematische Funktionsansicht einer erfindungsgemäßen Schmierfettzufuhreinrichtung für zwei Generatorlager,

Fig. 3    eine graphische Darstellung der Abhängigkeit zwischen Drehzahl und verbrauchter Schmierfettmenge bei verschiedenen Lagertemperaturen,

Fig. 4    eine graphische Darstellung der Abhängigkeit zwischen Temperatur und verbrauchter Schmierfettmenge bei verschiedenen Drehzahlen.

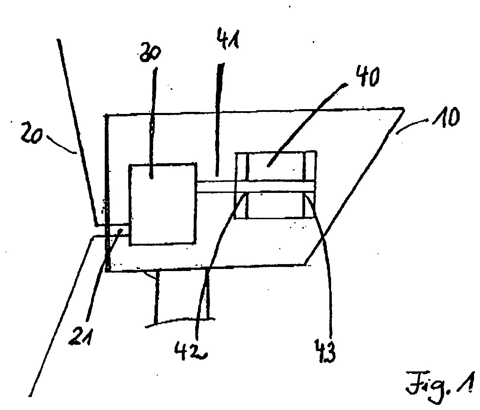

Fig. 1 zeigt in einer schematischen Ansicht einige im Maschinenhaus 10 angeordnete Bauteile einer Windenergieanlage. Von einem in Fig. 1 links angeordneten Rotor 20, geht eine Rotorwelle 21 in das Innere des Maschinenhauses 10 ab. Das eine Ende der Rotorwelle 21 ist mit dem Rotor 20 und das andere Ende der Rotorwelle 21 ist mit einem Getriebe 30 verbunden. Die Rotorwelle 21 rotiert, je nach Windstärke, z.B. mit 10 bis 20 Umdrehungen pro Minute. Das Getriebe 30 koppelt die Rotorwelle 21 an eine der Rotorwelle 21 am Generator 30 gegenüberliegende Generatorwelle 41. Die Generatorwelle weist im Betrieb, je nach Drehzahl der Rotorwelle 21, eine Drehzahl von etwa 1000 bis 2000 Umdrehungen pro Minute auf. Ein Ende der Generatorwelle 41 ist mit dem Getriebe 30 in Wirkverbindung, und mit einem anderen Ende treibt sie den Generator 40 an. Das andere Ende der Generatorwelle 41 ist im Generator 40 in einem A-Lager 42 und in einem B-Lager 43 drehbar gelagert. Beide Lager 42, 43 sind an jeweils einer der Stirnseiten des Generators 40 innen im Generator 40 angeordnet. Sowohl ein dem Getriebe 30 zugewandtes A-Lager 42 als auch dem Getriebe 30 abgewandtes B-Lager 43, sind fettgeschmiert.

Das Schmierfett altert und verschmutzt während des Betriebs. Das A- und B-Lager 42, 43 sollten folglich regelmäßig nachgeschmiert werden. Ist die Schmierung zu gering, erhöht sich der Reibungswiderstand und die Lagertemperatur steigt, und es kann zu erhöhtem Verschleiß und sogar zu Beschädigungen der Lager 42, 43 kommen. Auf der anderen Seite kann auch eine zu starke Schmierung der Lager 42, 43 zu Überhitzung führen. Die A- und B-Lager 42, 43 sind als Wälzlager ausgebildet. Wälzlager führen eine Walkarbeit an dem Schmierfett aus, die bei einer zu großen Schmierfettmenge zu einer Überhitzung des A- und B-Lagers 42, 43 führt.

Die Menge an Schmierfett in jedem der beiden Lager 42, 43 verbraucht sich während des Betriebs aus verschiedenen Gründen. Das Schmierfett wird zum einen während des Betriebes des Generators 40 stetig aus den Lagern 42, 43 heraus gepresst. Die beiden Lager 42, 43 sind nicht vollständig gegen den Austritt von Schmierfett abgedichtet, weil sonst keine Nachschmierung möglich ist. Eine Nachschmierung erfordert eine Austrittsmöglichkeit für das gealterte Schmierfett. Zum anderen zersetzt sich das Schmierfett durch Druck und starke Hitze. Darüber hinaus verschmutzt das Schmierfett während des Betriebs. Es ist somit eine den Arbeitsbedingungen angepasst Nachschmierung für einen optimalen Lauf der Lager 42, 43 notwendig.

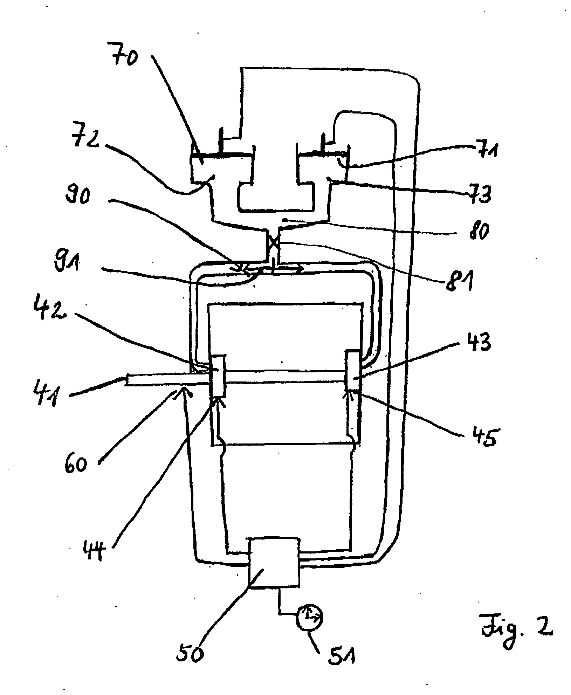

Fig. 2 zeigt schematisch eine erfindungsgemäße Nachschmiereinrichtung für das A- und B-Lager 42, 43. Die Nachschmiereinrichtung weist eine Steuerung 50 auf, in die Drehzahlmesswerte eines an der Generatorwelle 41 angeordneten Drehzahlmessgerätes 60 eingespeist werden. Das Drehzahlmessgerät 60 ermittelt ständig die Drehzahl der Generatorwelle 41. Die Steuerung 50 ist mit einer Uhr 51 gekoppelt. Eine in der Steuerung 50 vorgesehene Recheneinheit berechnet durch Integration der Drehzahl über die Zeit ab einem Nullpunkt eine Anzahl der absolvierten Generatorlagerumdrehungen. Dem A- und B-Lager 42, 43 zugeführte Schmierfettmengen bestimmen sich auch aus der Umdrehungsanzahl. Der Nullzeitpunkt kann z. B. durch die Steuerung 50 vorgegeben oder vom Servicepersonal eingegeben werden.

Ein am A-Lager 42 angeordneter A-Temperatursensor 44 und ein am B-Lager 43 angeordneter B-Temperatursensor 45 stehen ebenfalls mit der Steuerung 50 in Verbindung und führen der Recheneinheit ihre jeweiligen Temperaturmesswerte zu.

In der Steuerung 50 ist ein erster Speicher vorgesehen, in dem unter anderem Korrelationen zwischen Drehzahl, Umdrehungsanzahl, A-Temperatur, B-Temperatur und an das A- und B-Lager 42, 43 abzugebenden Schmierfettmengen abgelegt sind. In die Bestimmung der an das A- und B-Lager 42, 43 abzugebenden Schmierfettmengen können auch weitere Parameter, wie Außentemperatur, Innentemperatur des Maschinenhauses 10, Generatorleistung u. Ä. einfließen.

Die Steuerung steuert, mit den über die Korrelation ermittelten Steuerwerten, zwei Stempel 70, 71 zweier Schmierfettbehälter 72, 73 an. Der erste Schmierfettbehälter 72 ist für ein erstes Schmierfett und der zweite Schmierfettbehälter 73 ist für ein sich vom ersten Schmierfett, insbesondere hinsichtlich seiner Viskosität/Temperaturabhängigkeit, unterscheidendes zweites Schmierfett vorgesehen.

Je nach Höhe der über die A- und B- Temperatursensoren 44, 45 und des Außentemperatursensors gemessenen Temperaturwerte wird das Mischverhältnis des ersten und zweiten Schmierfetts verändert. Das erste Schmierfett ist bei geringer Temperatur viskos, das zweite Schmierfett ist bei höherer Temperatur viskos. Im Sommer wird somit das Mischverhältnis derart eingestellt, das eine größere Menge des zweiten Schmierfetts und im Winter eine größere Menge des ersten Schmierfetts der Schmierfettmischung zugeführt wird. Der erste Schmierlettbehälter 72 und der zweite Schmierfettbehälter 73 sind über Leitungen in einem ersten T-Stück 80 zusammengeführt, wo die Mischung der beiden Schmierfett durch Zusammenführen stattfindet. Nach dem T-Stück 80 kann eine Vermischungseinrichtung 81, z.B. in Form schräg gestellter Bleche oder durch Drehung des ersten T-Stücks um 90 Grad seiner durch die Leitungen von den beiden Schmierfettbehältem 72, 73 bestimmten Längsachse gegenüber einem zweiten T-Stück 90 vorgesehen sein.

An das T-Bein des ersten T-Stücks 80 schließt sich ein T-Bein eines zweiten T-Stücks 90 mit einem zwischen den T-Armen des zweiten T-Stücks 90 bewegbaren Schieber 91 an. Der Schieber 91 befördert das Schmierfettgemisch in je nach Bewegungsrichtung einer der Leitungen zum A-Lager 42 oder zum B-Lager 43. Statt des Schiebers 91 können verstellbare Ventile in jeder der Leitungen zu den Lagern 42, 43 vorgesehen sein. Die gesteuerte Verteilung des Schmierfetts auf die beiden Lager 42, 43 kann auch durch gesteuerte Lochblenden oder vorteilhaft durch Progressivverteiler erfolgen.

Der Schieber 91 und der erste und der zweite Stempel 72, 73 werden durch die Steuerung 50 aufeinander abgestimmt gesteuert.

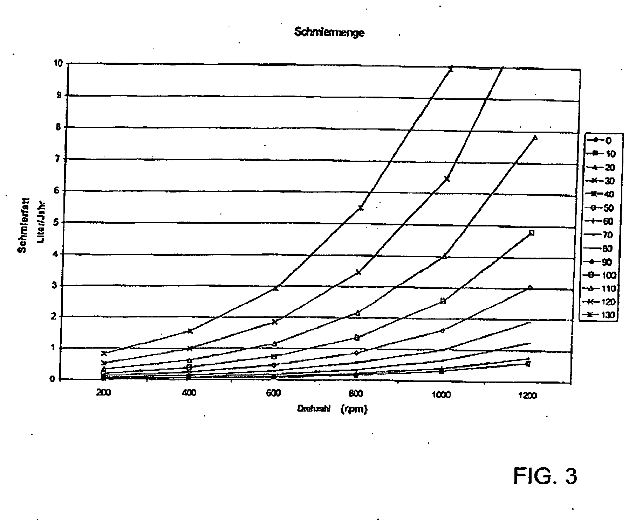

Die in Fig. 3 dargestellte Grafik zeigt die Abhängigkeit der pro Jahr verbrauchten Schmierfettmenge von der Drehzahl des A- und B-Lagers 42, 43 des Generators 40 bei verschiedenen Lagertemperaturen. Dabei wird vorausgesetzt, dass der Generator 40 während des gesamten Jahres mit einer konstanten Drehzahl läuft und eine konstante Lagertemperatur aufweist. Die verschiedenen Kurven sind dabei verschiedenen Lagertemperaturen zugeordnet. Die Höhe der Lagertemperaturen ist in Fig. 3 rechts neben der Grafik bei dem zugehörigen Zuordnungssymbol angegeben. Bei geringen Lagertemperaturen ist die benötigte Schmierfettmenge pro Jahr deutlich geringer als bei hohen Lagertemperaturen bei einer gleichen Drehzahl.

Gemäß Fig. 3 steigt bei einer vorgegebenen Lagertemperatur die pro Jahr benötigte Schmierfettmenge mit etwa der zweiten bis dritten Potenz der Drehzahl an. Der Generator 40 wird üblicherweise um einen Referenzpunkt von rpm=1000 (rpm= rounds per minute) bei einer Referenztemperatur von 90° C betrieben. Insbesondere steigt um diesen Referenzpunkt die verbrauchte Schmierfettmenge pro Jahr mit der dritten Potenz der Drehzahl nach der Gleichung

$$Schmierfettmenge = Referenzschmierfettmenge \left( \frac{gemessene\ Drehzahl}{Referenzdrehzahl} \right)^{3}.$$

Um die erforderliche minimale Schmierung auch bei abgeschalteter Windenergieanlage sicherzustellen, ist die minimale Schmierung nach obiger Gleichung auf etwa 9% der am Referenzpunkt benötigten Schmierfettmenge zu bemessen.

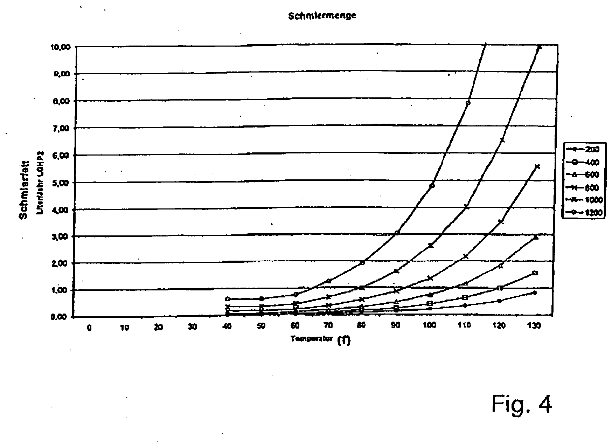

Die Grafik in Fig. 4 zeigt die in Fig. 3 dargestellten Abhängigkeiten in einer anderen graphischen Darstellung. In Fig. 4 sind sechs durch die Drehzahl parametrisierte Kurven abgebildet. Die unteren Kurven weisen eine geringere Drehzahl, die oberen Kurven eine höhere Drehzahl auf. Die Höhe der Drehzahl für jede der sechs Kurven ist rechts neben der Graphik mit den zugeordneten Zuordnungssymbolen dargestellt. In Fig.4 ist die pro Jahr benötigte Schmierfettmenge in Abhängigkeit von der Lagertemperatur aufgetragen.

Fig. 4 zeigt insbesondere, dass die benötigte Schmierfettmenge pro Jahr bei zunehmender Lagertemperatur mit der fünften Potenz ansteigt. Das gilt auch für den Referenzpunkt, der auch hier bei rpm=1000 und T= 90°C liegt. Es gilt der Zusammenhang:

$$Schmierfettmenge = Referenzschmierfettmenge \left( \frac{gemessene\ Temperatur}{Referenztemperatur} \right)^5$$

Fig. 4 ist zu entnehmen, dass die Schmierfettmenge ab ca. 50°C konstant zu halten ist und somit obige Gleichung begrenzt wird.

Die in den Fig.3 und Fig.4 dargestellten Zahlenwerte sind für das CARB-Lager C3044 und das SKF Fett LGHP2 ermittelt worden.

**Bezugszeichenliste**

| 10 | Machinenhaus |
|----|----|
| 20 | Rotor |
| 21 | Rotorwelle |
| 30 | Getriebe |
| 40 | Generator |
| 41 | Generatorwelle |
| 42 | A-Lager |
| 43 | B-Lager |
| 44 | A-Temperatursensor |
| 45 | B-Temperatursensor |
| 50 | Steuerung |
| 51 | Uhr |
| 60 | Drehzahlmessgerät |
| 70 | Stempel |
| 71 | Stempel |
| 72 | Schmierfettbehälter |
| 73 | Schmierfettbehälter |
| 80 | T-Stück |
| 81 | Vermischungseinrichtung |
| 90 | T-Stück |
| 91 | Schieber |

**Patentansprüche**

1. Windenergieanlage mit wenigstens einem Generatorlager (42, 43) und
   einer das wenigstens eine Generatorlager (42, 43) mit Schmierfett versorgenden Schmierfettzufuhreinrichtung (70, 71, 72, 73, 80, 81, 90, 91) und
   wenigstens einer Messeinrichtung (44, 45, 60) zur Messung von Werten wenigstens eines Parameters der betriebenen Windenergieanlage und
   einer Steuereinrichtung (50) zur Steuerung der von der Schmierfettzufuhreinrichtung (70, 71, 72, 73, 80, 81, 90, 91) abgegebenen Schmierfettmenge,
   **dadurch gekennzeichnet, dass** das wenigstens eine Generatorlager (42, 43) als Wälzlager ausgebildet ist und die wenigstens eine Messeinrichtung (44, 45, 60) zur Abgabe der Messwerte mit der Steuereinrichtung (50) in Verbindung steht und die Schmierfettzufuhreinrichtung (70, 71, 72, 73, 80, 81, 90, 91) zur Entgegennahme von in der Steuereinrichtung (50) aus den Messwerten ermittelbaren Steuerwerten mit der Steuereinrichtung (50) in Verbindung steht und der wenigstens eine Parameter eine Drehzahl und/oder eine Umdrehungsanzahl und/oder eine Temperatur umfasst.

2. Windenergieanlage nach Anspruch 1,
   **dadurch gekennzeichnet, dass** die wenigstens eine Messeinrichtung (44,45,60) zur Messung der Parameterwerte während eines störungsfreien Betriebs der Windenergieanlage bestimmt ist und die Steuereinrichtung (50) die Schmierfettzufuhreinrichtung (70, 71, 72, 73, 80, 81, 90, 91) zur Abgabe von Schmierfett an das wenigstens eine Lager (42, 43) während des störungsfreien Betriebs ansteuert.

3. Windenergieanlage nach Anspruch 1 oder 2,
**dadurch gekennzeichnet, dass** die Steuereinrichtung (50) die Schmierfettzufuhreinrichtung (70, 71, 72, 73, 80, 81, 90, 91) mit höher werdenden Messwerten des wenigstens einen Parameters zur Abgabe größerer Schmierfettmengen ansteuert.

4. Windenergieanlage nach Anspruch 1, 2 oder 3,
**dadurch gekennzeichnet, dass** die wenigstens eine Messeinrichtung (60) einen Umdrehungszähler zur Erfassung der Anzahlabsolvierter Lagerumdrehungen des wenigstens einen Lagers (42,43) und/oder einen Temperatursensor insbesondere im Generatorlager und/oder einen Drehzahlmesser aufweist.

5. Windenergieanlage nach Anspruch 4,
**dadurch gekennzeichnet, dass** der Umdrehungszähler eine Recheneinheit, die mit einer Zeitmesseinrichtung (51) und dem Drehzahlmesser in Verbindung steht, aufweist und der die absolvierte Lagerumdrehungen des wenigstens einen Generatorlagers (42, 43) aus der gemessenen Drehzahl und der gemessenen Zeit berechnet.

6. Windenergieanlage nach wenigstens einem der vorstehenden Ansprüche,
**dadurch gekennzeichnet, dass** die Schmierfettzufuhreinrichtung (70, 71, 72, 73, 80, 81, 90, 91) wenigstens zwei Schmierfettbehälter (72, 73) für unterschiedliche Schmierfette aufweist.

7. Windenergieanlage nach wenigstens einem der vorstehenden Ansprüche,
**dadurch gekennzeichnet, dass** die Steuereinrichtung (50) bei höherer gemessener Lagertemperatur die Schmierfettzufuhreinrichtung (70, 71, 72, 73, 80, 81, 90, 91) nicht zur Nachschmierung einer größeren Schmierfettmenge ansteuert, wenn die Anzahl der Lagerumdrehungen unterhalb eines Grenzwertes liegt.

8. Verfahren zur Durchführung mit einer Windenergieanlage nach wenigstens einem der Ansprüche 1 bis 7, indem einem als Wälzlager ausgebildeten Generatorlager (42, 43) Schmierfett durch eine Schmierfettzufuhreinrichtung (70, 71, 72, 73, 80, 81, 90, 91) zugeführt wird und
Werte wenigstens eines Parameters der betriebenen Windenergieanlage durch wenigstens eine Messeinrichtung (44, 45, 60) gemessen werden und
eine mit der wenigstens einen Messeinrichtung (44, 45, 60) und der Schmierfettzufuhreinrichtung (70, 71, 72, 73, 80, 81, 90, 91) in Verbindung stehende Steuereinrichtung (50) die Menge des von der Schmierfettzufuhreinrichtung (70, 71, 72, 73, 80, 81, 90, 91) zugeführten Schmierfettes in Abhängigkeit von den gemessenen Parameterwerten steuert.

9. Verfahren nach Anspruch 8,
**dadurch gekennzeichnet, dass** die wenigstens eine Messeinrichtung (44, 45, 60) Parameterwerte während eines störungsfreien Betriebs der Windenergieanlage bestimmt und die Steuereinrichtung (50) die Schmierfettzufuhreinrichtung (70, 71, 72, 73, 80, 81, 90, 91) zur Abgabe von Schmierfett an das wenigstens eine Generatorlager (42, 43) während des störungsfreien Betriebs ansteuert.

10. Verfahren nach Anspruch 8 oder 9,
**dadurch gekennzeichnet, dass** die Drehzahl des wenigstens einen Lagers mit der wenigstens einen Messeinrichtung (44, 45, 60) gemessen wird und die Steuereinrichtung (50) die Schmierfettzufuhreinrichtung (70, 71, 72, 73, 80, 81, 90, 91) mit höher werdender gemessener Drehzahl zur Abgabe größerer Schmierfettmengen ansteuert und dass sich die zugeführte Schmierfettmenge im Bereich eines Referenzpunktes um eine Referenzdrehzahl in Abhängigkeit der dritten Potenz des Quotienten aus gemessener Drehzahl und Referenzdrehzahl ändert nach der Formel:

$$Schmierfettmenge = Referenzschmierfettmenge \left( \frac{gemessene\ Drehzahl}{Referenzdrehzahl} \right)^{3}.$$

11. Verfahren nach Anspruch 10,
**dadurch gekennzeichnet, dass** die Lagertemperatur mit der wenigstens einen Messeinrichtung (44, 45, 60) gemessen wird und die Schmierfettzufuhreinrichtung (70, 71, 72, 73, 80, 81, 90, 91) mit höher werdender gemessener Lagertemperatur durch die Steuereinrichtung (50) zur Abgabe größerer Schmierfettmengen angesteuert wird und dass sich die zugeführte Schmierfettmenge im Bereich eines Referenzpunktes um eine Referenztemperatur in Abhängigkeit der fünften Potenz des Quotienten aus gemessener Temperatur und Referenztemperatur ändert nach der Formel:

$$Schmierfettmenge = Referenzschmierfettmenge \left( \frac{gemessene\ Temperatur}{Referenztemperatur} \right)^{5}.$$

**12.** Verfahren nach Anspruch 8,
**dadurch gekennzeichnet, dass** die Anzahl absolvierter Lagerumdrehungen gemessen wird und mit zunehmender Anzahl absolvierter Lagerumdrehungen eine, vorzugsweise linear zunehmende Schmierfettmenge abgegeben wird.

**Claims**

1. A wind energy plant with at least one generator bearing (42, 43) and a lubricating-grease supply device (70, 71, 72, 73, 80, 81, 90, 91) supplying the at least one generator bearing (42, 43) with lubricating grease and at least one measuring device (44, 45, 60) for measuring values of at least one parameter of the wind energy plant operated and a control device (50) for controlling the amount of lubricating grease dispensed by the lubricating-grease supply device (70, 71, 72, 73, 80, 81, 90, 91), **characterized in that** the at least one generator bearing (42, 43) is designed in the form of a rolling bearing and the at least one measuring device (44, 45, 60) is connected to the control device (50) in order to deliver the measurement values, and the lubricating-grease supply device (70, 71, 72, 73, 80, 81, 90, 91) is connected to the control device (50) in order to receive control values capable of being determined from the measurement values in the control device (50), and the at least one parameter comprises a rotation speed and/or a number of revolutions and/or a temperature.

2. A wind energy plant according to Claim 1, **characterized in that** the at least one measuring device (44, 45, 60) is intended to measure the parameter values during trouble-free operation of the wind energy plant, and the control device (50) actuates the lubricating-grease supply device (70, 71, 72, 73, 80, 81, 90, 91) in order to dispense lubricating grease to the at least one bearing (42, 43) during trouble-free operation.

3. A wind energy plant according to Claim 1 or 2, **characterized in that** the control device (50) actuates the lubricating-grease supply device (70, 71, 72, 73, 80, 81, 90, 91) with increasing measurement values of the at least one parameter in order to dispense larger quantities of lubricating grease.

4. A wind energy plant according to Claim 1, 2 or 3, **characterized in that** the at least one measuring device (60) has a revolution counter for detecting the number of completed revolutions of the at least one bearing (42, 43) and/or a temperature sensor in particular in the generator bearing and/or a tachometer.

5. A wind energy plant according to Claim 4, **characterized in that** the revolution counter has a computer unit which is connected to a timing device (51) and to the tachometer, and it calculates the completed revolutions of the at least one generator bearing (42, 43) from the measured rotation speed and the measured time.

6. A wind energy plant according to at least one of the preceding Claims, **characterized in that** the lubricating-grease supply device (70, 71, 72, 73, 80, 81, 90, 91) has at least two lubricating-grease containers (72, 73) for different lubricating greases.

7. A wind energy plant according to at least one of the preceding Claims, **characterized in that** in the case of a bearing temperature measured higher the control device (50) does not actuate the lubricating-grease supply device (70, 71, 72, 73, 80, 81, 90, 91) for the subsequent lubrication of a larger quantity of lubricating grease if the number of the bearing revolutions is below a threshold value.

8. A method of implementation with a wind energy plant according to at least one of Claims 1 to 7, in which lubricating grease is supplied by a lubricating-grease supply device (70, 71, 72, 73, 80, 81, 90, 91) to a generator bearing (42, 43) designed in the form of a rolling bearing, and values of at least one parameter of the operated wind energy plant are measured by at least one measurement device (44, 45, 60) and a control device (50) connected to the at least one measurement device (44, 45, 60) and the lubricating-grease supply device (70, 71, 72, 73, 80, 81, 90, 91) controls, in a manner dependent upon the measured parameter values, the quantity of the lubricating grease supplied by the lubricating-grease supply device (70, 71, 72, 73, 80, 81, 90, 91).

9. A method according to Claim 8, **characterized in that** the at least one measurement device (44, 45, 60) determines parameter values during trouble-free operation of the wind energy plant, and the control device (50) actuates the lubricating-grease supply device (70, 71, 72, 73, 80, 81, 90, 91) in order to dispense lubricating grease to the at least one generator bearing (42, 43) during trouble-free operation.

10. A method according to Claim 8 or 9, **characterized in that** the rotation speed of the at least one bearing is measured with the at least one measurement device (44, 45, 60), and the control device (50) actuates the lubricating-grease supply device (70, 71, 72, 73, 80, 81, 90, 91) with an increasing measured rotation speed in order to dispense larger quantities of lubricating grease, and the supplied quantity of lubricating grease varies in the range of a reference point about a reference rotation speed in a manner dependent upon the third power of the quotient of the measured rotation speed and the reference rotation speed according to the formula:

$$Quantity\ of\ \mathrm{lub}\,ricating\ grease =$$

$$reference\ quantity\ of\ \mathrm{lub}\,ricating\ grease \left(\frac{measured\ rotation\ speed}{reference\ rotation\ speed}\right)^3$$

11. A method according to Claim 10, **characterized in that** the bearing temperature is measured with the at least one measurement device (44, 45, 60), and the lubricating-grease supply device (70, 71, 72, 73, 80, 81, 90, 91) with an increasing measured bearing temperature is actuated by the control device (50) in order to dispense larger quantities of lubricating grease, and the supplied quantity of lubricating grease varies in the range of a reference point about a reference temperature in a manner dependent upon the fifth power of the quotient of the measured temperature and the reference temperature according to the formula:

$$Quantity\ of\ \mathrm{lub}\,ricating\ grease =$$

$$reference\ quantity\ of\ \mathrm{lub}\,ricating\ grease \left(\frac{measured\ temperature}{reference\ temperature}\right)^5$$

12. A method according to Claim 8, **characterized in that** the number of completed bearing revolutions is measured, and as the number of completed bearing revolutions increases a quantity of lubricating grease, preferably increasing in a linear manner, is dispensed.

**Revendications**

1. Eolienne avec au moins un palier de générateur (42, 43) et un dispositif d'alimentation en lubrifiant (70, 72, 72, 73, 80, 81, 90, 91) qui alimente le palier de générateur qui existe au moins (42, 43) en lubrifiant, avec au moins un dispositif de mesure (44, 45, 60) pour mesurer des valeurs d'au moins un paramètre de l'éolienne exploitée et avec un dispositif de commande (50) pour la commande de la quantité de lubrifiant délivrée par le dispositif d'alimentation en lubrifiant (70, 72, 72, 73, 80, 81, 90, 91), **caractérisée en ce que** le palier de générateur qui existe au moins (42, 43) est configuré comme un palier à roulement et le dispositif de mesure qui existe au moins (44, 45, 60) est en relation avec le dispositif de commande (50) pour délivrer les valeurs de mesure et le dispositif d'alimentation en lubrifiant (70, 72, 72, 73, 80, 81, 90, 91) est en relation avec le dispositif de commande (50) pour recevoir des valeurs de commande qui peuvent être déterminées à partir des valeurs de mesure dans le dispositiv de commande (50) et le paramètre qui existe au moins comprend une vitesse de rotation et/ou un nombre de tours et/ou une température.

2. Eolienne selon la revendication 1, **caractérisée en ce que** le dispositif de mesure qui existe au moins (44, 45, 60) est destiné à mesurer les valeurs des paramètres pendant un fonctionnement sans perturbation de l'éolienne et le dispositif de commande (50) excite le dispositif d'alimentation en lubrifiant (70, 72, 72, 73, 80, 81, 90, 91) pour qu'il délivre du lubrifiant au palier qui existe au moins (42, 43) pendant le fonctionnement sans perturbation.

3.  Eolienne selon la revendication 1 ou 2, **caractérisée en ce que** le dispositif de commande (50) excite le dispositif d'alimentation en lubrifiant (70, 72, 72, 73, 80, 81, 90, 91) avec des valeurs de mesure croissantes du paramètre qui existe au moins pour qu'il délivre de plus grandes quantités de lubrifiant.

4.  Eolienne selon la revendication 1, 2 ou 3, **caractérisée en ce que** le dispositif de mesure qui existe au moins (60) présente un compte-tours pour déterminer le nombre de tours de palier effectués du palier qui existe au moins (42, 43) et/ou un capteur de température en particulier dans le palier de générateur et/ou un tachymètre.

5.  Eolienne selon la revendication 4, **caractérisée en ce que** le compte-tours présente une unité de calcul qui est en relation avec un dispositif de chronométrage (51) et le tachymètre et qui calcule les tours de palier effectués du palier de générateur qui existe au moins (42, 43) à partir du nombre de tours mesurés et du temps mesuré.

6.  Eolienne selon au moins l'une des revendications précédentes, **caractérisée en ce que** le dispositif d'alimentation en lubrifiant (70, 72, 72, 73, 80, 81, 90, 91) présente au moins deux conteneurs de lubrifiant (72, 73) pour différents lubrifiants.

7.  Eolienne selon au moins l'une des revendications précédentes, **caractérisée en ce que** le dispositif de commande (50), lorsque la température du palier mesurée est élevée, n'excite pas le dispositif d'alimentation en lubrifiant (70, 72, 72, 73, 80, 81, 90, 91) au regraissage d'une plus grande quantité de lubrifiant lorsque le nombre de tours du palier se situe en dessous d'un seuil.

8.  Procédé à exécuter avec une éolienne selon au moins l'une des revendications 1 à 7, du lubrifiant étant amené par un dispositif d'alimentation en lubrifiant (70, 72, 72, 73, 80, 81, 90, 91) à un palier de générateur (42, 43) configuré comme un palier à roulement et des valeurs d'au moins un paramètre de l'éolienne exploitée étant mesurées par au moins un dispositif de mesure (44, 45, 60) et un dispositif de commande (50) qui est en relation avec le dispositif de mesure qui existe au moins (44, 45, 60) et le dispositif d'alimentation en lubrifiant (70, 72, 72, 73, 80, 81, 90, 91) commandant la quantité de lubrifiant amenée par le dispositif d'alimentation en lubrifiant (70, 72, 72, 73, 80, 81, 90, 91) en fonction des valeurs de paramètre mesurées.

9.  Procédé selon la revendication 8, **caractérisé en ce que** le dispositif de mesure qui existe au moins (44, 45, 60) détermine des valeurs de paramètres pendant un fonctionnement sans perturbation de l'éolienne et le dispositif de commande (50) excite le dispositif d'alimentation en lubrifiant (70, 72, 72, 73, 80, 81, 90, 91) à délivrer du lubrifiant au palier de générateur qui existe au moins (42, 43) pendant le fonctionnement sans perturbation.

10. Procédé selon la revendication 8 ou 9, **caractérisé en ce que** le nombre de tours du palier qui existe au moins est mesuré avec le dispositif de mesure qui existe au moins (44, 45, 60) et le dispositif de commande (50) excite le dispositif d'alimentation en lubrifiant (70, 72, 72, 73, 80, 81, 90, 91) avec un nombre de tours mesurés qui augmente à délivrer de plus grandes quantités de lubrifiant et que la quantité de lubrifiant amenée varie, dans la zone d'un point de référence autour d'un nombre de tours de référence, en fonction de la troisième puissance du quotient du nombre de tours mesurés et de la vitesse de rotation de référence selon la formule :

$$Quantité\ de\ \text{lub}\ rifiant = quantité\ de\ \text{lub}\ rifiant\ de\ référence \left( \frac{vitesse\ de\ rotation\ mesurée}{vitesse\ de\ rotation\ de\ référence} \right)^3$$

11. Procédé selon la revendication 10, **caractérisé en ce que** la température du palier est mesurée avec le dispositif de mesure qui existe au moins (44, 45, 60) et le dispositif d'alimentation en lubrifiant (70, 72, 72, 73, 80, 81, 90, 91) est excité, avec la température du palier mesurée qui augmente, par le dispositif de commande (50) pour délivrer de plus grandes quantités de lubrifiant et que la quantité de lubrifiant amenée varie, dans la zone d'un point de référence autour d'une température de référence, en fonction de la cinquième puissance du quotient de la température mesurée et de la température de référence selon la formule :

$$Quantité\ de\ \mathrm{lub}\,rifiant = quantité\ de\ \mathrm{lub}\,rifiant\ de\ référence \left( \frac{température\ mesurée}{température\ de\ référence} \right)^{5}$$

12. Procédé selon la revendication 8, **caractérisé en ce que** le nombre de tours de palier effectués est mesuré et qu'une quantité de lubrifiant qui augmente de préférence de manière linéaire est délivrée lorsque le nombre de tours de palier effectués augmente.

Fig. 1

Fig. 2

FIG. 3

Fig. 4

**EP 1 801 415 B2**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 10043593 A1
- DE 2919489 A1
- US 6125969 A
- DE 102004005543 A1
- JP 11117914 B
- DE 2919486 A1